(19) **Europäisches Patentamt**
**European Patent Office**
**Office européen des brevets**

(11) **EP 3 910 025 A1**

(12) **EUROPÄISCHE PATENTANMELDUNG**

(43) Veröffentlichungstag:
**17.11.2021 Patentblatt 2021/46**

(21) Anmeldenummer: **20174032.1**

(22) Anmeldetag: **12.05.2020**

(51) Int Cl.:
*C08L 75/06* (2006.01)    *C08J 99/00* (2006.01)
*C08L 75/08* (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Covestro Deutschland AG**
**51373 Leverkusen (DE)**

(72) Erfinder: **Die Erfindernennung liegt noch nicht vor**

(74) Vertreter: **Levpat**
**c/o Covestro AG**
**Gebäude 4825**
**51365 Leverkusen (DE)**

(54) **VERFAHREN ZUR HERSTELLUNG VON THERMOPLASTISCHEN POLYURETHANEN**

(57)    Die vorliegende Erfindung betrifft ein Verfahren zur Behandlung von thermoplastischem Polyurethan, das behandelte thermoplastische Polyurethan und dessen Verwendung.

EP 3 910 025 A1

**Beschreibung**

Die vorliegende Erfindung betrifft ein Verfahren zur Behandlung von thermoplastischem Polyurethan, das behandelte thermoplastische Polyurethan und dessen Verwendung.

Thermoplastische Polyurethane (TPU) finden eine breite Anwendung, weil sie gute Elastomereigenschaften aufweisen und leicht thermoplastisch weiterverarbeitet werden können. Durch geeignete Auswahl der Komponenten lässt sich eine große Variationsbreite mechanischer Eigenschaften erzielen. Eine Übersicht über TPU, ihre Eigenschaften und Anwendungen werden z.B. in Kunststoffe 68 (1978)819, Kautschuk, Gummi, Kunststoffe 35 (1982) 569; G. Becker, D. Braun: Kunststoff-Handbuch, Bd. 7 "Polyurethane" München, Wien, Carl Hanser Verlag 1983 gegeben. Einen Überblick über die unterschiedlichen Herstellverfahren gibt Plastikverarbeiter 40 (1989). Die wichtigsten technischen Verfahren zur Herstellung von TPU sind das Extruderverfahren (DE 1 964 834) und das Mischkopf-Band-Verfahren (GB 1,057,018).

TPU werden zumeist aus linearen Polyolen, wie Polyester-, Polyether- oder Polycarbonatpolyolen, organischen Diisocyanaten und kurzkettigen zumeist difunktionellen Alkoholen (Kettenverlängerern) aufgebaut. Daneben kommen ggf. noch Additive, Katalysatoren, Farbstoffe und Füllstoffe zum Einsatz. TPU können diskontinuierlich oder kontinuierlich hergestellt werden.

Üblicherweise werden die TPU nach der Herstellung aus einem Reaktionsextruder in Form von Polymersträngen ausgetragen, die dann auf einem Kühlband mit Wasser abgekühlt und anschließend in einem Granulator granuliert werden (Stranggranulation). Alternativ kann die Granulation auch in einem direkt an den Reaktionsextruder angeschlossenen Granulator erfolgen, wobei die Granulierung in Gegenwart von Kühlwasser erfolgt (zum Beispiel Unterwassergranulation). Durch diese Verfahrensschritte haftet noch eine gewisse Restfeuchtigkeit an den erhaltenen Granulaten, sodass häufig ein Trocknungsvorgang notwendig ist. Dazu können die Granulate in einem nachgeschalteten Trockner getrocknet werden. Anschließend können sie in die gewünscht Verpackung abgefüllt werden.

Durch diese Art der Granulatbehandlung kommt es jedoch häufig zu Schwankungen bei der Produktqualität aufgrund von noch vorhandener Restfeuchte und nicht vollständig abreagierten reaktiven Gruppen, insbesondere Isocyanatgruppen. Diese restlichen Isocyanatgruppen können mit noch vorhandenen Wassermolekülen aus der Restfeuchte der Granulate reagieren, wobei unter Abspaltung von Kohlendioxid primäre Aminogruppen entstehen. Diese Aminogruppen können nicht mehr zum weiteren Molekulargewichtsaufbau beitragen, sodass das anvisierte endgültige Molekulargewicht des TPU nicht mehr erreicht werden kann. Dadurch wird häufig das mechanische Eigenschaftsniveau der TPU, das maßgeblich von deren Molekulargewicht abhängt, negativ beeinflusst. In einem weiteren möglichen Reaktionsschritt können die Aminogruppen auch noch mit eventuellen vorhandenen, geringsten Mengen an freien Isocyanatgruppen zu Harnstoffgruppen abreagieren. Harnstoffgruppierungen sind im Vergleich zu Urethangruppen deutlich höher schmelzende Gruppierungen, die bei Extrusionsverarbeitungen von TPU dann häufig zu nicht aufgeschmolzenen Partikeln in Filmen oder Folien führen, was deren Qualität deutlich mindert oder die Extrusionsartikel sogar unbrauchbar machen kann.

Es war daher die Aufgabe, ein Verfahren zur Behandlung von TPU zur Verfügung zu stellen, das sicherstellt, dass die TPU-Granulate vor der Verpackung in geeignete Verpackungsbehältnisse möglichst vollständig chemisch ausreagiert sind und damit Nachteile, wie z. B. schwankende Produktqualität, wie z. B. schlechte Extrusionsqualität und unzureichende mechanische Eigenschaften, vermieden werden können.

Erfindungsgemäß wird diese Aufgabe gelöst durch ein Verfahren zur Behandlung von thermoplastischem Polyurethan, dadurch gekennzeichnet, dass die Behandlung die folgenden Schritte umfasst:

I) Bereitstellen des thermoplastischen Polyurethans (TPU-1) erhältlich oder erhalten durch Umsetzung von wenigstens einem Polyisocyanat mit wenigstens einem Polyol, und

II) Aussetzen des thermoplastischen Polyurethans (TPU-1) einer Temperatur im Bereich von 10 °C bis 150 °C unter einer Gasatmosphäre, wobei das Gas der Gasatmosphäre einen Taupunkt von ≤ - 10 °C aufweist, unter Erhalt eines behandelten thermoplastischen Polyurethans (TPU-2).

Es wurde überraschend gefunden, dass so behandeltes thermoplastisches Polyurethan (TPU-2) eine reproduzierbare Produktqualität und reproduzierbare mechanische Eigenschaften aufweist, sowie chemisch nahezu vollständig ausreagiert ist. Weiterhin wurde überraschend gefunden, dass der Polymerisationsgrad durch das erfindungsgemäße Verfahren erhöht wird. Dabei ist es erfindungswesentlich, dass das thermoplastische Polyurethan (TPU-1) unter einer Gasatmosphäre getempert wird, dessen Gas einen Taupunkt von ≤ - 10 °C aufweist.

Das Wort "ein" im Zusammenhang mit zählbaren Größen ist im Rahmen der vorliegenden Erfindung nur dann als Zahlwort zu verstehen, wenn dies ausdrücklich gesagt wird (z. B. durch den Ausdruck "genau ein"). Wenn im Folgenden beispielsweise von "einem Polyol" gesprochen wird, ist das Wort "ein" lediglich als unbestimmter Artikel und nicht als Zahlwort aufzufassen, es ist also damit auch eine Ausführungsform umfasst, die ein Gemisch aus mindestens zwei Polyolen enthält.

Bevorzugt bedeuten erfindungsgemäß die Ausdrücke "umfassend" oder "enthaltend", "im Wesentlichen bestehend aus" und besonders bevorzugt "bestehend aus".

Im Rahmen der Erfindung kann das thermoplastische Polyurethan (TPU-1) auch durch die Umsetzung von mehreren unterschiedlichen Polyisocyanaten, vorzugsweise Diisocyanaten, mit mehreren unterschiedlichen Polyolen erhalten werden oder erhalten worden sein. Im Rahmen der Erfindung kann das thermoplastische Polyurethan (TPU-1) auch durch die Umsetzung von mehreren unterschiedlichen Polyisocyanaten, vorzugsweise Diisocyanaten, mit mehreren unterschiedlichen Polyolen und mit einem oder mehreren Kettenverlängerern, vorzugsweise Diolen mit einem Molekulargewicht von kleiner gleich 500 g/mol, erhalten werden oder erhalten worden sein.

In einer bevorzugten Ausführungsform des erfindungsgemäßen Verfahrens hat das thermoplastische Polyurethan (TPU-1) vor der Bereitstellung in Schritt I) ein mehrstufiges Verfahren umfassend die folgenden Schritte durchlaufen hat:

a) Extrudieren des thermoplastischen Polyurethans (TPU-1),
b) Granulieren des extrudierten thermoplastischen Polyurethans (TPU-1) aus Schritt a), und
c) Trocknen des thermoplastischen Polyurethans (TPU-1) aus Schritt b).

Die Umsetzung des wenigstens einen Polyisocyanats mit dem wenigstens einen Polyol vor der Extrusion gemäß Schritt a) können beispielsweise in einem Reaktivextruder, einem dem Extruder vorgeschalteten Aggregat, das mit Statikmischern bestückt ist, oder einem Mischkopf erfolgen. Vorzugsweise finden beide Schritte in einem Reaktivextruder statt. Die Umsetzung und Extrusion erfolgen bei Temperaturen im Bereich von 100 °C bis 250 °C. Die Granulation erfolgt beispielsweise mittels Stranggranulation oder Unterwassergranulation, wobei das extrudierte thermoplastische Polyurethan (TPU-1) vor der Granulierung vorzugsweise auf kleiner 100 °C abgekühlt wird. Zum Trocken des granulierten thermoplastischen Polyurethans können beispielsweise Schwingsiebabsauger und Zentrifugaltrockner verwendet werden.

Zur Herstellung des thermoplastischen Polyurethans (TPU-1) kommt wenigstens ein Polyol und wenigstens ein organisches Polyisocyanat, vorzugsweise wenigstens ein Diisocyanat und ggf wenigstens ein kurzkettiges Diol (Kettenverlängerer) als Hauptaufbaukomponenten zum Einsatz. In einer bevorzugten Ausführungsform wird das thermoplastische Polyurethan (TPU-1) durch Umsetzung von wenigstens einem Polyisocyanat mit wenigstens einem Polyol und mit wenigstens einem Kettenverlängerer erhalten. In einer anderen bevorzugten Ausführungsform wird das thermoplastische Polyurethan (TPU-1) durch Umsetzung von wenigstens einem Diisocyanat mit wenigstens einem Polyol und mit wenigstens einem Kettenverlängerer erhalten.

Zur Beschleunigung der TPU-Bildungsreaktion können zusätzlich Katalysatoren zugesetzt werden. Zur Erzielung bestimmter Beständigkeiten gegen Witterungseinflüsse, UV-Licht, Hydrolyse, Oxidation, Abrieb, Verschmutzung sowie zur Verbesserung von Verarbeitungseigenschaften kommen gegebenenfalls Additive, Hilfs- und Zusatzstoffe zum Einsatz. Gegebenenfalls können auch monofunktionelle Kettenabbrecher zum Einsatz kommen. Zur Einstellung der Eigenschaften können die Aufbaukomponenten in relativ breiten molaren Verhältnissen variiert werden. Bewährt haben sich molare Verhältnisse von Polyolen zu Kettenverlängerern von 1:1 bis 1:12. Hierdurch ergeben sich Produkte mit Härten im Bereich von 45 Shore A bis 85 Shore D.

Die Herstellung des thermoplastischen Polyurethans (TPU-1) kann nach den bekannten Verfahren kontinuierlich, beispielsweise mit Reaktionsextrudern oder dem Bandverfahren nach one-shot oder dem Prepolymerverfahren, oder diskontinuierlich nach dem bekannten Prepolymerprozess erfolgen. Bei diesen Verfahren können die zur Reaktion kommenden Komponenten nacheinander oder gleichzeitig miteinander vermischt werden, wobei die Reaktion unmittelbar einsetzt. Beim Extruderverfahren werden die Aufbaukomponenten sowie gegebenenfalls Katalysatoren und/oder weitere Hilfs- und Zusatzstoffe einzeln oder als Gemisch in den Extruder eingeführt, z. B. bei Temperaturen von 100 bis 280°C, vorzugsweise 140 bis 250°C zur Reaktion gebracht, das erhaltene TPU wird extrudiert, abgekühlt und granuliert.

Geeignete Herstellungsverfahren für thermoplastische Polyurethane werden beispielsweise offenbart in EP 0 922 552 A1, DE 101 03 424 A1 oder WO 2006/072461 A1. Die Herstellung erfolgt üblicherweise auf einer Bandanlage oder einem Reaktionsextruder, kann aber auch im Labormaßstab, beispielsweise im Handgussverfahren, erfolgen. In Abhängigkeit der stofflichen Eigenschaften der Komponenten werden diese alle unmittelbar miteinander vermischt oder es werden einzelne Komponenten vorvermischt und/oder vorreagiert, z.B. zu Präpolymeren, und dann erst zur Polyaddition gebracht. In einer weiteren Ausführungsform wird zunächst ein thermoplastisches Polyurethan aus den Aufbaukomponenten, ggf. mit Katalysator hergestellt, in das ggf. noch Hilfsstoffe eingearbeitet sein können. Das homogene Verteilen erfolgt vorzugsweise in einem Extruder, bevorzugt in einem Zweiwellenextruder.

Zur Herstellung der erfindungsgemäßen thermoplastischen Polyurethane werden die Aufbaukomponenten bevorzugt in Gegenwart von Katalysatoren und gegebenenfalls Hilfsmitteln und/oder Zusatzstoffen üblicherweise in solchen Mengen zur Reaktion gebracht, dass das Äquivalenzverhältnis von NCO-Gruppen der Diisocyanate zur Summe der Hydroxylgruppen der eingesetzten Komponenten 0,95 bis 1 ,05 : 1 , vorzugsweise 0,97 bis 1 ,03 : 1 , weiter bevorzugt 0,98 bis 1,02 : 1 beträgt.

Als Polyole eignen sich alle dem Fachmann bekannten Polyole, vorzugsweise lineare hydroxylterminierte Polyole, mit einem zahlenmittleren Molekulargewicht (Mn) von 500 bis 5000 g/mol. Häufig spricht man daher auch von "im wesentlichen linearen Polyolen". Bevorzugt sind Polyesterdiole, Polyetherdiole, Polyetheresterdiole, Polycaprolactondiole, Polycarbonatdiole, Polyethercarbonatdiole oder Gemische aus diesen. Die Molekulargewichte solcher Polyole werden üblicherweise über deren OH-Zahl (Hydroxylzahl) errechnet, was dem Fachmann bekannt ist. Die OH-Zahl wird nach der DIN 53240 titrimetisch bestimmt. Aus der OH-Zahl (OHZ) lässt sich nach folgender Formel das Molgewicht von Polyolen ausrechnen:

$$Mn = 1000mg/g \cdot \frac{z \cdot 56.106g/Mol}{OHZ[mg/g]}$$

Dabei steht z für die Anzahl an OH-Gruppen im Makromolekül. Für ein lineares Diol ist z = 2. Produktionsbedingt enthalten diese oft kleine Mengen an nichtlinearen Verbindungen.

Geeignete Polyester-Diole können beispielsweise aus Dicarbonsäuren mit 2 bis 12 Kohlenstoffatomen, vorzugsweise 4 bis 6 Kohlenstoffatomen, und mehrwertigen Alkoholen hergestellt werden. Als Dicarbonsäuren kommen beispielsweise in Betracht: aliphatische Dicarbonsäuren, wie Bernsteinsäure, Glutarsäure, Adipinsäure, Korksäure, Azelainsäure und Sebacinsäure und aromatische Dicarbonsäuren, wie Phthalsäure, Isophthalsäure und Terephthalsäure. Die Dicarbonsäuren können einzeln oder als Gemische, z.B. in Form einer Bernstein-, Glutar- und Adipinsäuremischung, verwendet werden. Zur Herstellung der Polyester-Diole kann es gegebenenfalls vorteilhaft sein, anstelle der Dicarbonsäuren die entsprechenden Dicarbonsäurederivate, wie Carbonsäurediester mit 1 bis 4 Kohlenstoffatomen im Alkoholrest, Carbonsäureanhydride oder Carbonsäurechloride zu verwenden. Beispiele für mehrwertige Alkohole sind Glykole mit 2 bis 12, vorzugsweise 2 bis 6 Kohlenstoffatomen, wie Ethylenglykol, Diethylenglykol, 1,4-Butandiol, 1,5-Pentandiol, 1,6-Hexandiol, 1,10-Decandiol, 1,12-Dodecandiol, 2,2-Dimethyl-1,3-propandiol, 1,3-Propandiol, und Dipropylenglykol. Je nach den gewünschten Eigenschaften können die mehrwertigen Alkohole allein oder gegebenenfalls in Mischung untereinander verwendet werden. Geeignet sind ferner Ester der Kohlensäure mit den genannten Diolen, insbesondere solchen mit 4 bis 6 Kohlenstoffatomen, wie 1,4-Butandiol und/oder 1,6-Hexandiol. Solche Ester der Kohlensäure bezeichnet man auch als Polycarbonatdiole. Weiterhin als Ester geeignet sind Kondensationsprodukte von ω-Hydroxycarbonsäuren, beispielsweise ω-Hydroxycapronsäure und vorzugsweise Polymerisationsprodukte von Lactonen, beispielsweise gegebenenfalls substituierten ω-Caprolactonen. Als Polyester-Diole vorzugsweise verwendet werden Ethandiolpolyadipate, 1,4-Butandiol-polyadipate, Ethandiol-1,4-butandiol-polyadipate, 1,6-Hexandiol-neopentylglykol-polyadipate, 1,6-Hexandiol-1,4-butandiol-polyadipate sowie Polycaprolactone. Die Polyester-Diole besitzen ein zahlenmittleres Molekulargewicht (Mn) von 500 bis 5000 g/mol, Vorzugsweise 600 bis 4000 g/mol und besonders bevorzugt 800 bis 3000 g/mol. Sie können einzeln oder in Form von Mischungen untereinander zur Anwendung kommen. Die Molekulargewichte solcher Diole werden üblicherweise über deren OH-Zahl errechnet, wie oben erläutert.

Geeignete Polyether-Diole können dadurch hergestellt werden, dass man ein oder mehrere Alkylenoxide mit 2 bis 4 Kohlenstoffatomen im Alkylenrest mit einem Startermolekül, das zwei aktive Wasserstoffatome gebunden enthält, umsetzt. Als Alkylenoxide seien z.B. genannt: Ethylenoxid, 1,2-Propylenoxid, Epichlorhydrin und 1,2- Butylenoxid und 2,3-Butylenoxid.

Vorzugsweise Anwendung finden Ethylenoxid, Propylenoxid und Mischungen aus 1,2-Propylenoxid und Ethylenoxid. Die Alkylenoxide können einzeln, alternierend nacheinander oder als Mischungen verwendet werden. Als Startermoleküle kommen beispielsweise in Betracht: Wasser, Aminoalkohole, wie N-Alkyl-diethanolamine, beispielsweise N-Methyl-diethanolamin und Diole , wie Ethylenglykol, 1,2-Propandiol, 1,3-Propandiol, 1,4-Butandiol und 1,6-Hexandiol. Gegebenenfalls können auch Mischungen von Startermolekülen eingesetzt werden. Geeignete Polyetherole sind ferner die hydroxylgruppenhaltigen Polymerisationsprodukte des Tetrahydrofurans. Es können auch trifunktionelle Polyether in Anteilen von 0 bis 20 Gew.% bezogen auf die bifunktionellen Polyether eingesetzt werden, jedoch höchstens in solcher Menge, dass ein thermoplastisch verarbeitbares Produkt entsteht. Die im wesentlichen linearen Polyether-Diole besitzen ein zahlenmittleres Molekulargewicht (Mn) von 500 bis 18000 g/mol, vorzugsweise 750 bis 12000 und besonders bevorzugt 900 bis 4200 g/mol. Sie können sowohl einzeln als auch in Form von Mischungen untereinander zur Anwendung kommen. Die Molekulargewichte solcher Diole werden üblicherweise über deren OH-Zahl errechnet, wie oben erläutert.

Geeignete Polyetherester können beispielsweise hergestellt werden durch Umsetzung von kurzkettigen Polyetherdiolen, wie z. B. Polytetrahydrofuranen mit Molekulargewichten von 250 bis 1000 g/mol mit organischen Dicarbonsäuren, wie beispielsweise Bernsteinsäure oder Adipinsäure. Die Polyetheresterdiole besitzen ein zahlenmittleres Molekulargewicht (Mn) von 600 bis 5000 g/mol, vorzugsweise 700 bis 4000 g/mol und besonders bevorzugt 800 bis 3000 g/mol. Sie können einzeln oder in Form von Mischungen untereinander zur Anwendung kommen. Die Molekulargewichte solcher Diole werden üblicherweise über deren OH-Zahl errechnet, wie oben erläutert.

Geeignete Polycarbonatdiole können beispielsweise hergestellt werden durch Umsetzung von kurzkettigen Diolen, wie z. B. 1,4-Butandiol oder 1,6-Hexandiol mit Diphenylcarbonat oder Dimethylcarbonat unter Zuhilfenahme von Katalysatoren und Abspaltung von Phenol oder Methanol. Die Polycarbonatdiole besitzen ein zahlenmittleres Molekulargewicht (Mn) von 500 bis 6000 g/mol, vorzugsweise 750 bis 4000 g/mol und besonders bevorzugt 800 bis 3000 g/mol. Die Molekulargewichte solcher Diole werden üblicherweise über deren OH-Zahl errechnet, wie oben erläutert. Sie können einzeln oder in Form von Mischungen untereinander zur Anwendung kommen.

Geeignete Polyethercarbonatdiole können beispielsweise hergestellt werden durch Umsetzung von kurzkettigen Polyetherdiolen, wie z. B. Polytetrahydrofuranen mit Molekulargewichten von 250 bis 1000 g/mol mit Diphenyl- oder Dimethylcarbonat unter Zuhilfenahme von Katalysatoren und Abspaltung von Phenol oder Methanol. Weiterhin können Polyethercarbonatdiole hergestellt werden durch Copolymerisation von Alkylenoxiden, wie z. B. Ethylenoxid oder Propylenoxid oder Gemischen davon, mit Kohlendioxid unter Zuhilfenahme von geeigneten Katalysatoren, wie z. B. Doppelmetallcyanidkatalysatoren. Die Polyethercarbonatdiole besitzen ein zahlenmittleres Molekulargewicht (Mn) von 500 bis 8000 g/mol, vorzugsweise 750 bis 6000 g/mol und besonders bevorzugt 1000 bis 4500 g/mol Die Molekulargewichte solcher Diole werden üblicherweise über deren OH-Zahl errechnet, wie oben erläutert.

Als Polyisocyanate, vorzugsweise organische Diisocyanate, kommen beispielsweise aliphatische, cycloaliphatische, araliphatische, heterocyclische und aromatische Diisocyanate in Betracht, wie sie z.B. in Justus Liebigs Annalen der Chemie, 562, Seiten 75 bis 136, beschrieben werden. Dabei ist es unerheblich, ob die Polyisocyanate und Diisocyanate mittels Phosgenierung oder nach einem phosgenfreien Verfahren erhalten wurden. Die Polyisocyanate und Diisocyanate und / oder deren Vorläuferverbindungen können aus fossilen oder biologischen Quellen gewonnen worden sein. Vorzugsweise wird 1,6-Diisocyanatohexan (HDI) aus 1,6-Hexamethylendiamin und 1,5-Diisocyanatopentan aus 1,5-Pentamethylendiamin hergestellt, wobei das 1,6-Hexamethylendiamin und das 1,5-Pentamethylendiamin aus biologischen Quellen, vorzugsweise durch bakterielle Fermentation, gewonnen werden.

Im Einzelnen seien beispielhaft genannt: aliphatische Diisocyanate, wie 1,6-Hexamethylendiisocyanat, 1,5-Pentamethylendiisocyanat und 1,10-Decandiisocyanat, cycloaliphatische Diisocyanate, wie Isophorondiisocyanat, 1,4-Cyclohexandiisocyanat, 1-Methyl-2,4- und -2,6-cyclohexandiisocyanat sowie die entsprechenden Isomerengemische, 4,4'-, 2,4'- und 2,2'-Dicyclohexylmethandiisocyanat sowie die entsprechenden Isomerengemische und aromatische Diisocyanate, wie 2,4-Toluylendiisocyanat, Gemische aus 2,4- und 2,6-Toluylendiisocyanat, 4,4'-Diphenylmethandiisocyanat, 2,4'- Diphenylmethandiisocyanat und 2,2'-Diphenylmethandiisocyanat, Gemische aus 2,4'- Diphenylmethandiisocyanat und 4,4'-Diphenylmethandiisocyanat, urethanmodifizierte flüssige 4,4'-Diphenylmethandiisocyanate und/oder 2,4'-Diphenylmethandiisocyanate, 4,4'-Diisocyanatodiphenyl-ethan-(1,2) und 1,5-Naphthylendiisocyanat. Vorzugsweise verwendet werden 1,6-Hexamethylendiisocyanat, Isophorondiisocyanat, 4,4'-Dicyclohexylmethandiisocyanat, Diphenylmethandiisocyanat-Isomerengemische mit einem 4,4'-Diphenylmethandiisocyanatgehalt von größer als 96 Gew.-% und insbesondere 4,4'-Diphenylmethandiisocyanat und 1,5-Naphthylendiisocyanat. Die genannten Diisocyanate können einzeln oder in Form von Mischungen untereinander zur Anwendung kommen. Sie können auch zusammen mit bis zu 15 % (berechnet auf Gesamt-Diisocyanat), aber höchstens so viel eines Polyisocyanates, dass ein thermoplastisch verarbeitbares Produkt entsteht, verwendet werden. Beispiele sind Triphenylmethan-4,4',4"-triisocyanat und Polyphenylpolymethylen-polyisocyanate.

Als kurzkettige Kettenverlängerungsmittel können Diole oder Diamine mit einem Molekulargewicht von 60 bis 500 eingesetzt werden, vorzugsweise aliphatische Diole mit 2 bis 14 Kohlenstoffatomen, wie z.B. Ethandiol, 1,3-Propandiol, 1,5-Pentandiol, 1,6-Hexandiol, 1,8-Octandiol, 1-10-Decandiol, 1,12-Dodecandiol, Diethylenglykol, Dipropylenglykol und insbesondere 1,4-Butandiol. Geeignet sind jedoch auch Diester der Terephthalsäure mit Glykolen mit 2 bis 4 Kohlenstoffatomen, wie z.B. Terephthalsäure-bis-ethylenglykol oder Terephthalsäure-bis-1,4-butandiol, Hydroxyalkylenether des Hydrochinons, wie z.B. 1,4-Di(β-hydroxyethyl)-hydrochinon, ethoxylierte Bisphenole, wie z.B. 1,4-Di-(β-hydroxyethyl)-bisphenol A, (cyclo)aliphatische Diamine, wie z.B. Isophorondiamin, Ethylendiamin, 1,2- Propylen-diamin, 1,3-Propylendiamin, N-Methylpropylen-1,3-diamin, N,N'-Dimethylethylendiamin und aromatische Diamine, wie z.B. 2,4-Toluylendiamin und 2,6-Toluylendiamin, 3,5-Diethyl-2,4-toluylendiamin und/oder 3,5-Diethyl -2,6-toluylendiamin und primäre mono-, di-, tri- und/oder tetraalkylsubstituierte 4,4'-Diaminodiphenylmethane. Es können auch Gemische der oben genannten Kettenverlängerer eingesetzt werden. Daneben können auch kleinere Mengen an Triolen zugesetzt werden, aber höchstens so viel eines Triols, dass ein thermoplastisch verarbeitbares Produkt entsteht.

Als Katalysatoren können die üblichen aus der Polyurethanchemie bekannten Katalysatoren eingesetzt werden. Geeignete Katalysatoren sind an sich bekannte und übliche tertiäre Amine, wie z.B. Triethylamin, Dimethylcyclohexylamin, N-Methylmorpholin, N,N'-Dimethyl-piperazin, 2-(Dimethylaminoethoxy)-ethanol, Diazabicyclo-[2,2,2]-octan, und ähnliche sowie insbesondere organische Metallverbindungen wie Titanverbindungen, Eisenverbindungen, Wismutverbindungen, Zinkverbindungen, Zirkonverbindungen, Zinnverbindungen, z.B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Bevorzugte Katalysatoren sind organische Metallverbindungen, insbesondere Titansäureester, Wismutverbindungen, Zirkonverbindungen, Eisen- oder Zinnverbindungen. Ganz besonders bevorzugt sind Dibutylzinndilaurat, Zinndioctoat und Titansäureester.

Als Additive, Hilfs- und Zusatzstoffe können beispielsweise Gleitmittel, wie Fettsäureester, deren Metallseifen, Fettsäureamide und Siliconverbindungen, Antiblockmittel, Inhibitoren, Stabilisatoren gegen Hydrolyse, Licht, Hitze und Verfärbung, Flammschutzmittel, Farbstoffe, Pigmente, anorganische oder organische Füllstoffe, Nukleierungsmittel und Verstärkungsmittel eingesetzt werden. Verstärkungsmittel sind insbesondere faserartige Verstärkungsstoffe wie anorganische Fasern, die nach dem Stand der Technik hergestellt werden und auch mit einer Schlichte beaufschlagt sein können. Nähere Angaben über die genannten Hilfs- und Zusatzmittel sind der Fachliteratur zu entnehmen, beispielsweise J.H. Saunders, K.C. Frisch: "High Polymers", Band XVI, Polyurethane, Teil 1 und 2, Interscience Publishers 1962 bzw. 1964, R.Gächter, H.Müller (Ed.): Taschenbuch der Kunststoff-Additive, 3.Ausgabe, Hanser Verlag, München 1989, oder DE-A 29 01 774.

Als monofunktionelle Kettenabbrecher können Monoalkohole wie z. B. 1-Butanol, 1-Hexanol, 1-Oktanol und Stearylalkohol oder Monoamine, wie z. b. 1-Butylamin oder Stearylamin eingesetzt werden, um ein bestimmtes TPU-Molekulargewicht einzustellen. Diese dienen teilweise auch als Entformungshilfen.

Eine Gasatmosphäre mit einem Gas, das einen Taupunkt von ≤ - 10 °C aufweist, lässt sich durch Entfeuchten oder befeuchten von Gas erreichen, je nachdem welchen Taupunkt das Gas vor der Behandlung aufweist. Die Bestimmung des Taupunktes des Gases kann beispielsweise mit einem Taupunktspiegelhygrometer erfolgen. Entfeuchtung des Gases kann mit verschiedensten Trockner erfolgen, beispielsweise mit Kondensationstrocknern oder Absorptionstrockner. Als besonders wirkungsvoll hat sich die Verwendung von Rotationsentfeuchtern als Adsorptionstrockner erwiesen. Dabei wird der feuchte Gasstrom durch ein rotierendes, mit Adsorptionsmittel beschichtetes, Sorptionsrad geleitet und auf diese Weise getrocknet. Auf der Gegenseite wird das Rad regeneriert, um das kontinuierliche Aufbereiten des zu trocknenden Gases effektiv zu gewährleisten. Durch Erweiterung der Anlagentechnik, beispielsweise mit Vor- und Nachkühlermodulen, können Taupunkte bis -65 °C und somit eine relative Prozessgasfeuchte von 0,05% erreicht werden. Der Taupunkt der Gasatmosphäre kann direkt am Adsorptionstrockner als erwünschter Taupunkt eingestellt werden. Der Adsorptionstrockner arbeitet dann kontinuierlich unter Erzeugung eines Prozessgases mit dem gewählten Taupunkt. Adsorptionstrockner haben spezielle Funktionen, z. B. erfolgt das Trocknen bis ein festgelegter Taupunkt (°C) erreicht wird, der mit externen, mit dem Gerät verbundenen Sensoren gemessen wird.

In einer bevorzugten Ausführungsform des erfindungsgemäßen Verfahrens weist das Gas der Gasatmosphäre einen Taupunkt von ≤ - 15 °C, vorzugsweise von ≤ - 20 °C, und besonders bevorzugt von ≤ - 25 °C auf. In einer weiteren bevorzugten Ausführungsform des erfindungsgemäßen Verfahrens weist das Gas einen Taupunkt im Bereich von - 10 °C bis - 40 °C, vorzugsweise im Bereich von - 15 °C bis - 35 °C und besonders bevorzugt im Bereich von - 20 °C bis - 30 °C auf.

In einer bevorzugten Ausführungsform des erfindungsgemäßen Verfahrens wird das thermoplastische Polyurethan (TPU-1) der Temperatur für einem Zeitraum von 1 Stunde bis 12 Stunden, vorzugsweise einem Zeitraum von 2 Stunden bis 10 Stunden, besonders bevorzugt einem Zeitraum von 3 Stunden bis 9 Stunden, ganz besonders bevorzugt einem Zeitraum von 4 Stunden bis 8 Stunden und noch bevorzugter einem Zeitraum von 4 Stunden bis 7 Stunden unter Gasatmosphäre ausgesetzt.

In einer bevorzugten Ausführungsform des erfindungsgemäßen Verfahrens ist das Gas der Gasatmosphäre Luft, ein inertes Gas, oder ein Gemisch aus Luft und einem inerten Gas, wobei das inerte Gas vorzugsweise ausgewählt ist aus der Gruppe bestehend aus Stickstoff, Kohlenstoffdioxid, Argon und / oder einer Mischung aus mindestens zwei hiervon.

In einer bevorzugten Ausführungsform des erfindungsgemäßen Verfahrens wird der Taupunkt des Gases der Gasatmosphäre in Schritt II) bei Eintritt in die Vorrichtung konstant gehalten. Vorzugsweise ist der Taupunkt des Gases der Gasatmosphäre in Schritt II) und der Taupunkt des Gases der Gasatmosphäre in dem Schlauch und / oder der Rohrleitung, über die das thermoplastische Polyurethan (TPU-1) der Vorrichtung für Schritt II) zuführt wird, im Wesentlichen konstant, d.h. die Gasatmosphäre in der Vorrichtung für Schritt II) und der Zuführungsmittel (Schlauch und / oder Rohr) weist bei der eingestellten Temperatur in der Vorrichtung einen im Wesentlichen konstanten Taupunkt auf

Dies hat den Vorteil, dass das thermoplastische Polyurethan (TPU-2) eine noch bessere Produktkonstanz aufweist. Dies macht sich insbesondere nach der Verarbeitung der (TPU-2) in den mechanischen Eigenschaften und der Extrusionsqualität von extrudierten Folien und Filmen positiv bemerkbar.

In einer bevorzugten Ausführungsform des erfindungsgemäßen Verfahrens liegt der Druck der Gasatmosphäre im Bereich von 0,01 bar absolut bis 5,0 bar absolut, vorzugsweise im Bereich von 0,1 bar absolut bis 4,5 bar absolut und besonders bevorzugt bei 0,2 bis 3,5 bar absolut. "Bar absolut" im Sinne der Erfindung bedeutet den gemessenen Druck gegenüber dem Druck Null im leeren Raum (Vakuum).

In einer bevorzugten Ausführungsform des erfindungsgemäßen Verfahrens wird das thermoplastische Polyurethan (TPU-1) einer Temperatur im Bereich von 20 °C bis 150 °C, vorzugsweise im Bereich von 25 °C bis 130 °C, besonders bevorzugt im Bereich von 30 °C bis 110 °C und ganz besonders bevorzugt im Bereich von 30 °C bis 100 °C unter Gasatmosphäre ausgesetzt.

Das erfindungsgemäße Verfahren zur Behandlung von thermoplastischem Polyurethan wird beispielsweise in einer Vorrichtung wie einem Silo, einem Behälter oder einem Trockenschrank durchgeführt. Beispielsweise kann das thermoplastisches Polyurethan (TPU-1) nach der Granulierung und Trocknung in einem nachgeschalteten Trockner durch Förderleitungen in beispielsweise ein Silo gefördert und für mehrere Stunden unter Umwälzung bei Temperaturen von 10 bis 100 °C in Gegenwart von Luft, die mit einem zuvor eingestellten, vorzugsweise konstanten, Taupunkt von ≤ - 10 °C dem Silo über Rohrleitungen zugeführt wurde, getempert werden. Dabei ist es vorteilhaft wenn auch für den Transport des thermoplastischen Polyurethans (TPU-1) durch die Transportleitungen zu der Vorrichtung, beispielsweise einem Tempersilo, ein Gas mit einem zuvor eingestellten, vorzugsweise konstanten, Taupunkt von ≤ - 10 °C verwendet wird. Das thermoplastische Polyurethan (TPU-1) kann beispielsweise durch einen Luftstrom bewegt und gefördert werden, der entweder durch Anlegen eines Vakuums an eine Transportleitung verursacht wird, wodurch ein Luftstrom mit einem zuvor eingestellten Taupunkt von ≤ - 10 °C in die Leitung gelangt oder durch Druckluft verursacht wird.

In einer bevorzugten Ausführungsform des erfindungsgemäßen Verfahrens erfolgt Schritt II) in einer Vorrichtung, wobei die Vorrichtung vorzugsweise ein Behälter oder Silo ist.

In einer bevorzugten Ausführungsform des erfindungsgemäßen Verfahrens wird das thermoplastische Polyurethan (TPU-1) über einen Schlauch und / oder eine Rohrleitung der Vorrichtung für Schritt II) zugeführt, vorzugsweise wobei der Schlauch und / oder die Rohrleitung jeweils eine Gasatmosphäre aufweisen und das Gas der Gasatmosphäre einen Taupunkt von ≤ - 10 °C aufweist, besonders bevorzugt wobei der Schlauch und / oder die Rohrleitung jeweils eine Temperatur im Bereich von 10 °C bis 100 °C und eine Gasatmosphäre aufweisen und das Gas der Gasatmosphäre einenTaupunkt von ≤ - 10 °C aufweist.

In einer bevorzugten Ausführungsform des erfindungsgemäßen Verfahrens weist die Vorrichtung, der Schlauch, die Rohrleitung und / oder die Gasatmosphäre eine Temperatur im Bereich von 10 °C bis 100 °C auf.

In einer weiteren bevorzugten Ausführungsform des erfindungsgemäßen Verfahrens ist der Druck der Gasatmosphäre in der Vorrichtung, dem Schlauch und / oder der Rohrleitung konstant.

In einer bevorzugten Ausführungsform des erfindungsgemäßen Verfahrens wird das thermoplastische Polyurethan (TPU-1 und TPU-2) von dem Gas der Gasatmosphäre umströmt, vorzugsweise durch das Gas umgewälzt. Dies hat den Vorteil, dass das thermoplastische Polyurethan gleichmäßig erwärmt wird und eine gleichmäßige Wärmeverteilung aufweist.

In einer bevorzugten Ausführungsform des erfindungsgemäßen Verfahrens liegt das Verhältnis von dem Volumen des Gases der Gasatmosphäre zu dem Volumen des thermoplastischen Polyurethans (TPU-1) im Bereich von 1 bis 1000, vorzugsweise im Bereich von 1,5 bis 500, und besonders bevorzugt im Bereich von 2 bis 100. In einer weiteren bevorzugten Ausführungsform des erfindungsgemäßen Verfahrens liegt das Verhältnis von dem Volumen des Gases der Gasatmosphäre zu dem Volumen des thermoplastischen Polyurethans (TPU-1 und TPU-2) im Bereich von 1 bis 1000, vorzugsweise im Bereich von 1,5 bis 500, und besonders bevorzugt im Bereich von 2 bis 100.

In einer bevorzugten Ausführungsform des erfindungsgemäßen Verfahrens ist der NCO-Gruppengehalt des thermoplastischen Polyurethans (TPU-2) um mindestens 30 %, vorzugsweise um mindestens 40 % und besonders bevorzugt um mindestens 50% geringer, als der NCO-Gruppengehalt des thermoplastischen Polyurethans (TPU-1), wobei der NCO-Gruppengehalt angelehnt an die DIN EN ISO 14896 bestimmt wird. In einer weiteren bevorzugten Ausführungsform des erfindungsgemäßen Verfahrens ist der NCO-Gruppengehalt des thermoplastischen Polyurethans (TPU-2) um mindestens 30 %, vorzugsweise um mindestens 40 % und besonders bevorzugt um mindestens 50% geringer, nachdem das thermoplastische Polyurethan einer Temperatur im Bereich von 10 °C bis 100 °C unter einer Gasatmosphäre ausgesetzt wurden, bezogen auf den NCO-Gruppengehalt des thermoplastischen Polyurethans (TPU-1) bevor dieses einer Temperatur im Bereich von 10 °C bis 100 °C unter einer Gasatmosphäre ausgesetzt wurde, wobei der NCO-Gruppengehalt angelehnt an die DIN EN ISO 14896 bestimmt wird. Angelehnt an die DIN EN ISO 14896 (01. 2009) bedeutet, dass diese Vorschrift mit folgenden Abweichungen durchgeführt wurde: Statt Toluol wird N-Methylpyrrolidon als Lösungsmittel verwendet. Die Konzentration an Dibutylamin und Salzsäure beträgt 0,5 mol/l. Dibutylamin wird in Dimethylsulfoxid statt in Toluol gelöst. Die Salzsäure wird nicht in Wasser, sondern in einem Gemisch aus 85% Isopropanol und 15% Wasser gelöst.

In einer bevorzugten Ausführungsform des erfindungsgemäßen Verfahrens wird das thermoplastische Polyurethan (TPU-1) einer Temperatur im Bereich von 20 °C bis 100 °C, vorzugsweise im Bereich von 30 °C bis 100 °C, besonders bevorzugt im Bereich von 50 °C bis 100 °C und ganz besonders bevorzugt im Bereich von 50 °C bis 90 °C unter Gasatmosphäre ausgesetzt.

In einer bevorzugten Ausführungsform des erfindungsgemäßen Verfahrens ist das thermoplastische Polyurethan (TPU-1 und / oder TPU-2) ein Granulat und weist eine durchschnittliche Größe im Bereich von 2 mm bis 8 mm, vorzugsweise im Bereich von 3 mm bis 7 mm, und besonders bevorzugt im Bereich von 3,5 mm bis 6,5 mm auf.

In einer bevorzugten Ausführungsform des erfindungsgemäßen Verfahrens ist das thermoplastische Polyurethan (TPU-1 und / oder TPU-2) ein Granulat und weist eine Oberfläche im Bereich von 12 mm$^2$ bis 201 mm$^2$, vorzugsweise im Bereich von 28 mm$^2$ bis 154 mm$^2$ und besonders bevorzugt im Bereich von 38 mm$^2$ bis 133 mm$^2$ auf.

In einer bevorzugten Ausführungsform des erfindungsgemäßen Verfahrens weist das thermoplastische Polyurethan (TPU-1 und / oder TPU-2) im Falle von Kugelgranulat einen Durchmesser im Bereich von 2 mm bis 8 mm aufweisen und im Fall von Stranggranulat einen Durchmesser im Bereich von 1 mm bis 7,5 mm auf.

In einer bevorzugten Ausführungsform des erfindungsgemäßen Verfahrens umfasst die Behandlung die folgenden Schritte:

I) Bereitstellen des thermoplastischen Polyurethans (TPU-1) erhältlich oder erhalten durch Umsetzung von wenigstens einem Polyisocyanat mit wenigstens einem Polyol, und

II) Aussetzen des thermoplastischen Polyurethans (TPU-1) einer Temperatur im Bereich von 10 °C bis 100 °C unter einer Gasatmosphäre für einen Zeitraum von 1 Stunde bis 12 Stunden, wobei das Gas der Gasatmosphäre einen Taupunkt von ≤ - 10 °C aufweist, unter Erhalt eines behandelten thermoplastischen Polyurethans (TPU-2).

In einer bevorzugten Ausführungsform des erfindungsgemäßen Verfahrens umfasst die Behandlung die folgenden Schritte:

I) Bereitstellen des thermoplastischen Polyurethans (TPU-1) erhältlich oder erhalten durch Umsetzung von wenigstens einem Polyisocyanat mit wenigstens einem Polyol, und

II) Aussetzen des thermoplastischen Polyurethans (TPU-1) einer Temperatur im Bereich von 10 °C bis 100 °C unter einer Gasatmosphäre für einen Zeitraum von 1 Stunde bis 12 Stunden in einem Silo, wobei das Gas der Gasatmosphäre einen Taupunkt von ≤ - 10 °C aufweist, unter Erhalt eines behandelten thermoplastischen Polyurethans (TPU-2).

In einer bevorzugten Ausführungsform des erfindungsgemäßen Verfahrens umfasst die Behandlung die folgenden Schritte:

I) Bereitstellen des thermoplastischen Polyurethans (TPU-1) erhältlich oder erhalten durch Umsetzung von wenigstens einem Polyisocyanat mit wenigstens einem Polyol, und

II) Aussetzen des thermoplastischen Polyurethans (TPU-1) einer Temperatur im Bereich von 50 °C bis 90 °C unter einer Gasatmosphäre für einen Zeitraum von 1 Stunde bis 12 Stunden, wobei das Gas der Gasatmosphäre einen Taupunkt im Bereich von - 15 °C bis - 35 °C aufweist, unter Erhalt eines behandelten thermoplastischen Polyurethans (TPU-2).

In einer bevorzugten Ausführungsform des erfindungsgemäßen Verfahrens umfasst die Behandlung die folgenden Schritte:

I) Bereitstellen des thermoplastischen Polyurethans (TPU-1) erhältlich oder erhalten durch Umsetzung von wenigstens einem Polyisocyanat mit wenigstens einem Polyol, und

II) Aussetzen des thermoplastischen Polyurethans (TPU-1) einer Temperatur im Bereich von 50 °C bis 90 °C unter einer Gasatmosphäre für einen Zeitraum von 1 Stunde bis 12 Stunden in einem Silo, wobei das Gas der Gasatmosphäre einen Taupunkt im Bereich von - 15 °C bis - 35 °C aufweist, unter Erhalt eines behandelten thermoplastischen Polyurethans (TPU-2).

Ein weiterer Gegenstand der Erfindung ist ein thermoplastisches Polyurethan (TPU-2), erhalten oder erhältlich nach dem erfindungsgemäßen Verfahren.

Ein weiterer Gegenstand der Erfindung sind die nach dem erfindungsgemäßen, kontinuierlichen Verfahren hergestellten thermoplastisch verarbeitbaren Polyurethane (TPU-2) und deren Verwendung zur Herstellung von Formteilen mittels Spritzgießen, sowie Herstellung von Filmen, Folien, Schläuchen, Rohren und Kabelummantelungen mittels Extrudieren und Herstellung von Beschichtungen mittels Kalandrieren.

Ein weiterer Gegenstand der Erfindung ist die Verwendung des erfindungsgemäßen thermoplastischen Polyurethans (TPU-2) zur Herstellung einer Zusammensetzung, einer thermoplastischen Formmasse, eines Formkörpers, einer Folie eines Films und / oder einer Faser.

Ein weiterer Gegenstand der Erfindung ist die Verwendung des erfindungsgemäßen Verfahrens zur Herstellung von thermoplastischem Polyurethan (TPU-2).

Ein weiterer Gegenstand der Erfindung ist die Verwendung des erfindungsgemäßen Verfahrens zur Umwandlung von thermoplastischem Polyurethan (TPU-1) in von thermoplastisches Polyurethan (TPU-2).

Ein weiterer Gegenstand der Erfindung ist die Verwendung des erfindungsgemäßen Verfahrens zur Behandlung von thermoplastischem Polyurethan (TPU-1).

Weitere Ausführungsformen der vorliegenden Erfindung sind den Ansprüchen und den Beispielen zu entnehmen. Es versteht sich, dass die vorstehend genannten erläuterten Merkmale des erfindungsgemäßen Gegenstandes/Verfahrens bzw. der erfindungsgemäßen Verwendungen nicht nur in der jeweils angegebenen Kombination, sondern auch in anderen Kombinationen verwendbar sind, ohne den Rahmen der Erfindung zu verlassen. So ist z. B. auch die Kombination von einem bevorzugten Merkmal mit einem besonders bevorzugten Merkmal, oder eines nicht weiter charakterisierten Merkmals mit einem besonders bevorzugten Merkmal etc. implizit umfasst, auch wenn diese Kombination nicht ausdrücklich erwähnt wird.

Die nachfolgenden Beispiele dienen der Veranschaulichung der Erfindung, sind aber in keiner Weise einschränkend hinsichtlich des Gegenstands der vorliegenden Erfindung.

Verwendete TPU Produkte

| | |
|---|---|
| Desmopan 385S: | Aromatisches, esterbasiertes thermoplastisches Polyurethan der Covestro AG mit einer Shore A Härte von 85 |
| Desmopan 2590A: | Aromatisches, esterbasiertes thermoplastisches Polyurethan der Covestro AG mit einer Shore A Härte von 90 |
| Desmopan 192A: | Aromatisches, esterbasiertes thermoplastisches Polyurethan der Covestro AG mit einer Shore A Härte von 92 |
| Desmopan 85085A: | Aliphatisches, ester- und etherbasiertes thermoplastisches Polyurethan der Covestro AG mit einer Shore A Härte von 85 |
| Desmopan 9370AU: | Aromatisches, etherbasiertes thermoplastisches Polyurethan der Covestro AG mit einer Shore A Härte von 70 |
| Desmopan 6080A: | Aromatisches, etherbasiertes thermoplastisches Polyurethan der Covestro AG mit einer Shore A Härte von 80 |
| Desmopan 9665DU: | Aromatisches, etherbasiertes thermoplastisches Polyurethan der Covestro AG mit einer Shore D Härte von 65 |

Zur Beurteilung des Einflusses der verwendeten Förder- und Trocknungsluft auf die Eigenschaften der jeweiligen TPU Produkte, wurden Proben unmittelbar nach der Herstellung, Granulation (Stranggranulierung oder Unterwassergranulierung, wird bei den nachfolgenden Versuchen angegeben) und anschließender Vortrocknung mittels einer Schwingsiebabsaugung oder eines Zentrifugaltrockners (die Art der Vortrocknung ist jeweils bei den nachfolgenden Versuchen angegeben) gezogen. Die jeweils TPU Proben wurden dann einerseits mit Umgebungsluft, deren Luftfeuchtigkeit gemäß den klimatischen äußeren Bedingungen schwankt und andererseits mit Trockenluft (Taupunkt - 25 °C) 30 Minuten bei 110 °C getrocknet. Die Trockenluft mit einem konstanten Taupunkt von - 25 °C wurde mit einem Rotationsentfeuchter generiert. Dabei wurde der feuchte Eingangsgasstrom (Luftstrom) durch ein rotierendes, mit Adsorptionsmittel beschichtetes, Sorptionsrad geleitet und auf diese Weise getrocknet. Der Taupunkt des Gases (des Luftstroms) am Ausgang des Rotationsentfeuchters, d.h. nach der Trocknung, wurde kontinuierlich mittels Sensoren gemessen, sodass das Gas jederzeit einen konstanten Taupunkt aufwies.. Für die Trocknung der Proben wurde einerseits ein Trockenlufttrockner der Firma Helios und andererseits ein "Turb etuve" Umlufttrockner der Firma Cerco-Semip verwendet. Der Helios-Trockner arbeitete mit Trockenluft, mit einem konstanten Taupunkt von -25 °C. Für die Trocknung der Granulatproben wurde eine Luftmenge von 250 l/min gewählt. Der Turb Etuve Trockner von Cerco-Semip nutzt zur Trocknung Umgebungsluft, die mittels einer Heizspirale erhitzt wird. Für die Umwälzung der Luft sorgt ein Ventilator. Es wurde jeweils 1 kg Probe für 30 Minuten bei 110 °C getrocknet. Bei beiden Trocknern umströmte die jeweilige Luft unter Normaldruck (1013,25 hPa) das jeweilige Granulat. Nach dem Trocknen wurden die NCO-Gehalte, die Lösungsviskositäten, der Schmelzflussindex (MVR), und die mechanischen Eigenschaften der TPU-Proben bestimmt. Von einigen Proben wurde noch die Molekulargewichtsverteilung mittel Gelpermeationschromatographie bestimmt. Die entsprechenden Werte vor der Trocknung wurden nicht bestimmt, weil es sich um die gleiche Ausgangsprobe für beide Trocknungsmethoden handelte. Vor der Trocknung wurde lediglich der NCO-Gehalt bestimmt, um die Abnahme durch die Trocknung zu ermitteln.

**Testbedingungen:**

Zugversuch

Der Zugversuch erfolgte an S1-Stäben [entspricht Prüfkörper Typ 5 nach EN ISO 527-1 (02. 2012), ausgestanzt aus Spritzplatten] oder als Stäbe direkt gespritzt gemäß DIN 53504 (03. 2017) mit einer Zuggeschwindigkeit von 200 mm/min.

Schmelzflussindex (MVR)

Die MVR Messungen wurden bei je nach Produkt bei unterschiedlichen Temperaturen mit 10 kg (98N) Auflagegewicht und 5 min. Vorheizzeit gemäß ISO 1133 (06. 2005) mit einem MVR Gerät der Fa. Göttfert, Modell MP-D, gemessen. Die Messtemperaturen sind bei den jeweiligen Produkten in den nachfolgenden Tabellen angegeben.

Lösungsviskosität

Die Messung der Lösungsviskosität erfolgte mit einem Ubbelohde-Viskosimeter vom Typ 50110 in Anlehnung an die DIN 51562-1 (01. 1999). Es wurden 99,7 g N-Methyl-2-pyrrolidon mit 0,1% Dibutylamin und 0,4 g TPU-Granulat eingewogen. Die Proben wurden auf einem Magnetrührer bei ca. 70 °C ca. 1 Stunde gerührt und über Nacht auf Raumtemperatur abgekühlt. Die Proben und ein Blindwert (reines Lösungsmittel) wurden bei 25 °C an einem Viskositätsmessplatz der Fa. Schott gemessen. Die relative Lösungsviskosität berechnet sich aus der Zeit (Lösung) dividiert durch die Zeit (Lösungsmittel). Der Viskositätsmessplatz der Fa. Schott besteht aus: Viskositätsmessplatz AVS 400, Messstativ ASV/S, Glasthermostat, Ubbelohde-Viskosimeter Typ 50110.

NCO-Gehalt

Angelehnt an die DIN EN ISO 14896 (01. 2009) mit folgenden Abweichungen:
Statt Toluol wird N-Methylpyrrolidon als Lösungsmittel verwendet. Die Konzentration an Dibutylamin und Salzsäure beträgt 0,5 mol/l. Dibutylamin wird in Dimethylsulfoxid statt in Toluol gelöst. Die Salzsäure wird nicht in Wasser, sondern in einem Gemisch aus 85% Isopropanol und 15% Wasser gelöst.

Molekulargewichte

Die Bestimmung der zahlenmittleren Molekulargewichte Mn und gewichtsmittleren Molekulargewichte Mw der thermoplastischen Polyurethane erfolgte, gelöst in HFIP (Hexafluorisopropanol) mittels GPC. Die Bestimmung des Molekulargewichts erfolgte mittels einer Säulenkombination aus einer Vorsäule und 3 hintereinandergeschalteter GPC-Säulen 30 × 8 mm: 1000 Å PSS PFG 7μ, 300 Å PSS PFG 7μ und 100 Å PSS PFG 7μ. Fluß: 1 ml/min HFIP (fluorochem, 99,9%) mit Kaliumtrifluoracetat von Aldrich, 98%, (3 g auf 400 ml)), Smarline RI-Detektor 2300 Knauer. Eingespritzt werden 100 μl Probelösung, Konzentration 2 mg/ml. Die Proben werden vor der Messung durch einen 0,45 μm PTFE-Filter gegeben. Gemessen wird bei Raumtemperatur, kalibriert mit einem PMMA-Standard-Kit von PSS (von 102 - 981000 g/mol im Peakmaximum). Als Vergleichsgas wurde bei den Versuchen Umgebungsluft eingesetzt. Die Umgebungsluft hatte im Zeitraum der Messungen einen Taupunkt von 17,2 °C, bei einer relativen Luftfeuchtigkeit von 84%, bei einem Druck von 1014 hPa und einer Temperatur von 20 °C, die absolute Luftfeuchte betrug 14,5 g/m$^3$. Die trockene Prozessluft, als Trockenluft bezeichnet, hatte im Zeitraum der Messungen einen Taupunkt von -25 °C, bei einer relativen Luftfeuchtigkeit von 3,4%, bei einem Druck von 1014 hPa und einer Temperatur von 20 °C, die absolute Luftfeuchte betrug 0,6 g/m$^3$.

Die vorliegende Erfindung wird im Folgenden anhand von Beispielen näher erläutert, ohne sie jedoch auf diese einzuschränken.

**Beispiele**

**Beispiel 1:** Desmopan 2590A: Herstellung in einem Reaktionsextruder, Unterwassergranulierung, Vortrocknung mittels Zentrifugaltrockner.

Die TPU-Probe wurde geteilt und wie oben beschrieben wurde ein Teil der TPU-Probe mit Umgebungsluft und der andere Teil der TPU-Probe mit Trockenluft getempert.

Ergebnisse:

**Tabelle 1:** Ergebnisse der Temperns von Desmopan 2590A mit Umgebungsluft und Trockenluft.

| Temperung mit | Rest-NCO Gehalt | Lösungsviskosität | MVR (190 °C) | 100% Modul | Reißfestigkeit | Reißdehnung | GPC-Molekulargewichtsverteilung | | |
|---|---|---|---|---|---|---|---|---|---|
| | [Gew.-%] | | [ml / 10 min] | [MPa] | [MPa] | [%] | Mn | Mw | Pd |
| Vor Temperung | 0,132 | | | | | | | | |
| Umgebungsluft | 0,012 | 1,472 | 18,6 | 11,9 | 40,1 | 448 | 63540 | 125200 | 1,97 |
| Trockenluft | 0,007 | 1,487 | 14,8 | 11,5 | 43,2 | 474 | 72660 | 138300 | 1,90 |

Mit Pd ist die Polydispersität gemeint, die sich durch Division von Mw durch Mn ergibt.

Es ist deutlich zu erkennen, dass beim Tempern mit Trockenluft eine geringfügig höhere Lösungsviskosität, ein geringerer MVR-Wert und eine höhere Reißfestigkeit erhalten werden. Dies deutet auf eine lineare Erhöhung des Molgewichts während des Temperns hin. Der Rest-NCO Gehalt nimmt im Vergleich zum Ausgangswert nach dem Tempern deutlich ab und liegt nach beiden Temperarten auf einem ähnlichen Niveau. Da bei Verwendung von Trockenluft beim Tempern eine höhere Lösungsviskosität und eine höhere Reißfestigkeit resultiert, ist die Verringerung des Rest NCO-Gehaltes auf eine lineare Molekulargewichtserhöhung zurückzuführen. Bei der Verringerung des Rest NCO-Gehaltes nach dem Tempern mit Umgebungsluft muss daher auch eine Reaktion eines Teils der NCO-Gruppen mit Wasser stattgefunden haben, was unerwünscht ist. Dies belegen auch die Ergebnisse der GPC-Molgewichtsverteilung mit einem höheren Molgewicht der Probe, die mit Trockenluft getempert wurde.

**Beispiel 2:** Desmopan 385S: Herstellung in einem Reaktionsextruder, Granulierung mittels Stranggranulation und Vortrocknung mittels Schwingsiebabsaugung.

Die TPU-Probe wurde geteilt und wie oben beschrieben wurde ein Teil der TPU-Probe mit Umgebungsluft und der andere Teil der TPU-Probe mit Trockenluft getempert.

Ergebnisse:

**Tabelle 2:** Ergebnisse der Temperns von Desmopan 385S mit Umgebungsluft und Trockenluft.

| Temperung mit | Rest NCO-Gehalt | Lösungsviskosität | MVR (200 °C) | 100%-Modul | Reißfestigkeit | Reißdehnung |
|---|---|---|---|---|---|---|
| | [Gew.-%] | | [ml / 10 min] | [MPa] | [MPa] | [%] |
| Vor Temperung | 0,186 | | | | | |
| Umgebungsluft | 0,065 | 1,48 | 19 | 5,1 | 45,8 | 649 |
| Trockenluft | 0,068 | 1,56 | 13 | 5,1 | 51,2 | 627 |

Es ist deutlich zu erkennen, dass beim Tempern mit Trockenluft eine höhere Lösungsviskosität, ein geringerer MVR-Wert und eine höhere Reißfestigkeit erhalten werden. Dies deutet auf eine lineare Erhöhung des Molgewichts während des Temperns hin. Der Rest-NCO Gehalt nimmt im Vergleich zum Ausgangswert nach dem Tempern deutlich ab und liegt nach beiden Temperarten auf einem ähnlichen Niveau. Da bei Verwendung von Trockenluft beim Tempern eine höhere Lösungsviskosität und eine höhere Reißfestigkeit resultiert, ist die Verringerung des Rest NCO-Gehaltes auf eine lineare Molekulargewichtserhöhung zurückzuführen. Bei der Verringerung des Rest NCO-Gehaltes nach dem Tempern mit Umgebungsluft muss daher auch eine Reaktion eines Teils der NCO-Gruppen mit Wasser stattgefunden haben, was unerwünscht ist.

**Beispiel 3:** Desmopan 192: Herstellung in einem Reaktionsextruder, Granulierung mittels Stranggranulation und Vortrocknung mittels Schwingsiebabsaugung.

Die TPU-Probe wurde geteilt und wie oben beschrieben wurde ein Teil der TPU-Probe mit Umgebungsluft und der andere Teil der TPU-Probe mit Trockenluft getempert.

Ergebnisse:

**Tabelle 3:** Ergebnisse der Temperns von Desmopan 192 mit Umgebungsluft und Trockenluft. Mit Pd ist die Polydispersität gemeint, die sich durch Division von Mw durch Mn ergibt.

| Temperung mit | Rest-NCO Gehalt | Lösungsviskosität | MVR (190 °C) | 100% Modul | Reißfestigkeit | Reißdehnung | GPC-Molekulargewichtsverteilung | | |
|---|---|---|---|---|---|---|---|---|---|
| | [Gew.-%] | | [ml / 10 min] | [MPa] | [MPa] | [%] | Mn | Mw | Pd |
| Vor Temperung | 0,223 | | | | | | | | |
| Umgebungsluft | 0,073 | 1,476 | 32,2 | 9,0 | 52,6 | 611 | 97030 | 246200 | 2,11 |
| Trockenluft | 0,092 | 1,503 | 25,2 | 9,2 | 55,8 | 605 | 116800 | 207700 | 2,14 |

13

Es ist deutlich zu erkennen, dass beim Tempern mit Trockenluft eine höhere Lösungsviskosität, ein geringerer MVR-Wert und eine höhere Reißfestigkeit erhalten werden. Dies deutet auf eine lineare Erhöhung des Molgewichts während des Temperns hin. Der Rest-NCO Gehalt nimmt im Vergleich zum Ausgangswert nach dem Tempern deutlich ab und liegt nach beiden Temperarten unter 0,1%. Da bei Verwendung von Trockenluft beim Tempern eine höhere Lösungsviskosität und eine höhere Reißfestigkeit resultiert, ist die Verringerung des Rest NCO-Gehaltes auf eine lineare Molekulargewichtserhöhung zurückzuführen. Bei der Verringerung des Rest NCO-Gehaltes nach dem Tempern mit Umgebungsluft muss daher auch eine Reaktion eines Teils der NCO-Gruppen mit Wasser stattgefunden haben, was unerwünscht ist. Dies belegen auch die Ergebnisse der GPC-Molgewichtsverteilung mit einem höheren Molgewicht der Probe, die mit Trockenluft getempert wurde.

**Beispiel 4:** Desmopan 85085A: Herstellung in einem Reaktionsextruder, Unterwassergranulierung, Vortrocknung mittels Zentrifugaltrockner.

Die TPU-Probe wurde geteilt und wie oben beschrieben wurde ein Teil der TPU-Probe mit Umgebungsluft und der andere Teil der TPU-Probe mit Trockenluft getempert.

Ergebnisse:

**Tabelle 4:** Ergebnisse der Temperns von Desmopan 85085A mit Umgebungsluft und Trockenluft.Mit Pd ist die Polydispersität gemeint, die sich durch Division von Mw durch Mn ergibt.

| Temperung mit | Rest-NCO Gehalt | Lösungsviskosität | MVR (180 °C) | 100% Modul | Reißfestigkeit | Reißdehnung | GPC-Molgewichtsvertellung | | |
|---|---|---|---|---|---|---|---|---|---|
| | [Gew.-%] | | [ml / 10 min] | [MPa] | [MPa] | [%] | Mn | Mw | Pd |
| Vor Temperung | 0,226 | | | | | | | | |
| Umgebungsluft | 0,087 | 1,52 | 49 | 6,2 | 37,8 | 918 | 123470 | 244200 | 1,98 |
| Trockenluft | 0,085 | 1,71 | 32 | 6,4 | 50,0 | 846 | 223820 | 427500 | 1,91 |

Es ist deutlich zu erkennen, dass beim Tempern mit Trockenluft eine höhere Lösungsviskosität, ein geringerer MVR-Wert und eine höhere Reißfestigkeit erhalten werden. Dies deutet auf eine lineare Erhöhung des Molgewichts während des Temperns hin. Der Rest-NCO Gehalt nimmt im Vergleich zum Ausgangswert nach dem Tempern deutlich ab und liegt nach beiden Temperarten auf einem ähnlichen Niveau. Da bei Verwendung von Trockenluft beim Tempern eine höhere Lösungsviskosität und eine höhere Reißfestigkeit resultiert, ist die Verringerung des Rest NCO-Gehaltes auf eine lineare Molekulargewichtserhöhung zurückzuführen. Bei der Verringerung des Rest NCO-Gehaltes nach dem Tempern mit Umgebungsluft muss daher auch eine Reaktion eines Teils der NCO-Gruppen mit Wasser stattgefunden haben, was unerwünscht ist. Dies belegen auch die Ergebnisse der GPC-Molgewichtsverteilung mit einem höheren Molgewicht der Probe, die mit Trockenluft getempert wurde.

**Beispiel 5:** Desmopan 9370AU: Herstellung in einem Reaktionsextruder, Granulierung mittels Stranggranulation und Vortrocknung mittels Schwingsiebabsaugung.

Die TPU-Probe wurde geteilt und wie oben beschrieben wurde ein Teil der TPU-Probe mit Umgebungsluft und der andere Teil der TPU-Probe mit Trockenluft getempert.

Ergebnisse:

**Tabelle 5:** Ergebnisse des Temperns von Desmopan 9370AU mit Umgebungsluft und Trockenluft.

| Temperung mit | Rest-NCO Gehalt vor der Temperung | Lösungsviskosität | MVR (190 °C) | 100% Modul | Reißfestigkeit | Reißdehnung |
|---|---|---|---|---|---|---|
| | [Gew.-%] | | [ml / 10 min] | [MPa] | [MPa] | [%] |
| Vor Temperung | 0,188 | | | | | |
| Umgebungsluft | 0,072 | 1,41 | 30 | 2,7 | 27,2 | 836 |
| Trockenluft | 0,068 | 1,44 | 20 | 2,8 | 31,3 | 787 |

Es ist deutlich zu erkennen, dass beim Tempern mit Trockenluft eine geringfügig höhere Lösungsviskosität, ein geringerer MVR-Wert und eine höhere Reißfestigkeit erhalten werden. Dies deutet auf eine lineare Erhöhung des Molgewichts während des Temperns hin. Der Rest-NCO Gehalt nimmt im Vergleich zum Ausgangswert nach dem Tempern deutlich ab und liegt nach beiden Temperarten auf einem ähnlichen Niveau. Da bei Verwendung von Trockenluft beim Tempern eine höhere Lösungsviskosität und eine höhere Reißfestigkeit resultiert, ist die Verringerung des Rest NCO-Gehaltes auf eine lineare Molekulargewichtserhöhung zurückzuführen. Bei der Verringerung des Rest NCO-Gehaltes nach dem Tempern mit Umgebungsluft muss daher auch eine Reaktion eines Teils der NCO-Gruppen mit Wasser stattgefunden haben, was unerwünscht ist.

**Beispiel 6:** Desmopan 6080A: Herstellung in einem Reaktionsextruder, Granulierung mittels Stranggranulation und Vortrocknung mittels Schwingsiebabsaugung.

Die TPU-Probe wurde geteilt und wie oben beschrieben wurde ein Teil der TPU-Probe mit Umgebungsluft und der andere Teil der TPU-Probe mit Trockenluft getempert.

Ergebnisse:

**Tabelle 6:** Ergebnisse des Temperns von Desmopan 6080A mit Umgebungsluft und Trockenluft.

| Temperung mit | Rest-NCO Gehalt | Lösungsviskosität | MVR (190 °C) | 100% Modul | Reißfestigkeit | Reißdehnung | GPC-Molekulargewichtsverteilung | | |
|---|---|---|---|---|---|---|---|---|---|
| | [Gew.-%] | | [ml / 10 min] | [MPa] | [MPa] | [%] | Mn | Mw | Pd |
| Vor Temperung | 0,330 | | | | | | | | |
| Umgebungsluft | 0,143 | 1,404 | 25,8 | 5,9 | 23,9 | 672 | 159100 | 369500 | 2,32 |
| Trockenluft | 0,144 | 1,488 | 11,3 | 6,0 | 26,8 | 552 | 226600 | 602700 | 2,66 |

Mit Pd ist die Polydispersität gemeint, die sich durch Division von Mw durch Mn ergibt.

Es ist deutlich zu erkennen, dass beim Tempern mit Trockenluft eine höhere Lösungsviskosität, ein geringerer MVR-Wert und eine höhere Reißfestigkeit erhalten werden. Dies deutet auf eine lineare Erhöhung des Molgewichts während des Temperns hin. Der Rest-NCO Gehalt nimmt im Vergleich zum Ausgangswert nach dem Tempern deutlich ab und liegt nach beiden Temperarten auf gleichem Niveau. Da bei Verwendung von Trockenluft beim Tempern eine höhere Lösungsviskosität und eine höhere Reißfestigkeit resultiert, ist die Verringerung des Rest NCO-Gehaltes auf eine lineare Molekulargewichtserhöhung zurückzuführen. Bei der Verringerung des Rest NCO-Gehaltes nach dem Tempern mit Umgebungsluft muss daher auch eine Reaktion eines Teils der NCO-Gruppen mit Wasser stattgefunden haben, was unerwünscht ist. Dies belegen auch die Ergebnisse der GPC-Molgewichtsverteilung mit einem deutlich höheren Molgewicht der Probe, die mit Trockenluft getempert wurde.

**Beispiel 7:** Desmopan 9665DU: Herstellung in einem Reaktionsextruder, Granulierung mittels Stranggranulation und Vortrocknung mittels Schwingsiebabsaugung.

Die TPU-Probe wurde geteilt und wie oben beschrieben wurde ein Teil der TPU-Probe mit Umgebungsluft und der andere Teil der TPU-Probe mit Trockenluft getempert.

Ergebnisse:

**Tabelle 7:** Ergebnisse des Temperns von Desmopan 9665DU mit Umgebungsluft und Trockenluft.

| Temperung mit | Rest-NCO Gehalt vor der Temperung | Lösungsviskosität | MVR (210 °C) | 100% Modul | Reißfestigkeit | Reißdehnung |
|---|---|---|---|---|---|---|
| | [Gew.-%] | | [ml / 10 min] | [MPa] | [MPa] | [%] |
| Vor Temperung | 0,343 | | | | | |
| Umgebungsluft | 0,126 | 1,50 | 12 | 27,6 | 53,0 | 836 |
| Trockenluft | 0,131 | 1,62 | 8 | 29,0 | 54,7 | 787 |

Es ist deutlich zu erkennen, dass beim Tempern mit Trockenluft eine höhere Lösungsviskosität, ein geringerer MVR-Wert und eine höhere Reißfestigkeit erhalten werden. Dies deutet auf eine lineare Erhöhung des Molgewichts während des Temperns hin. Der Rest-NCO Gehalt nimmt im Vergleich zum Ausgangswert nach dem Tempern deutlich ab und liegt nach beiden Temperarten auf einem ähnlichen Niveau. Da bei Verwendung von Trockenluft beim Tempern eine höhere Lösungsviskosität und eine höhere Reißfestigkeit resultiert, ist die Verringerung des Rest NCO-Gehaltes auf eine lineare Molekulargewichtserhöhung zurückzuführen. Bei der Verringerung des Rest NCO-Gehaltes nach dem Tempern mit Umgebungsluft muss daher auch eine Reaktion eines Teils der NCO-Gruppen mit Wasser stattgefunden haben, was unerwünscht ist.

Die aufgeführten Beispiele 1-7 zeigen deutlich den Vorteil auf, den man erzielt, wenn TPU Proben mit Trockenluft anstelle von Umgebungsluft behandelt werden.

**Patentansprüche**

1. Verfahren zur Behandlung von thermoplastischem Polyurethan, **dadurch gekennzeichnet, dass** die Behandlung die folgenden Schritte umfasst:

   I) Bereitstellen des thermoplastischen Polyurethans (TPU-1) erhältlich oder erhalten durch Umsetzung von wenigstens einem Polyisocyanat mit wenigstens einem Polyol, und

   II) Aussetzen des thermoplastischen Polyurethans (TPU-1) einer Temperatur im Bereich von 10 °C bis 150 °C unter einer Gasatmosphäre, wobei das Gas der Gasatmosphäre einen Taupunkt von $\leq$ - 10 °C aufweist, unter Erhalt eines behandelten thermoplastischen Polyurethans (TPU-2).

**2.** Verfahren nach Anspruch 1, wobei das thermoplastische Polyurethan (TPU-1) vor der Bereitstellung in Schritt I) ein mehrstufiges Verfahren umfassend die folgenden Schritte durchlaufen hat:

    a) Extrudieren des thermoplastischen Polyurethans (TPU-1),
    b) Granulieren des extrudierten thermoplastischen Polyurethans (TPU-1) aus Schritt a), und
    c) Trocknen des thermoplastischen Polyurethans (TPU-1) aus Schritt b).

**3.** Verfahren nach einem der Ansprüche 1 oder 2, **dadurch gekennzeichnet, dass** das Gas der Gasatmosphäre einen Taupunkt von ≤ - 15 °C, vorzugsweise von ≤ - 20 °C, und besonders bevorzugt von ≤ - 25 °C aufweist.

**4.** Verfahren nach einem der Ansprüche 1 bis 3, **dadurch gekennzeichnet, dass** das thermoplastische Polyurethan (TPU-1) der Temperatur für einem Zeitraum von 1 Stunde bis 12 Stunden, vorzugsweise einem Zeitraum von 2 Stunden bis 10 Stunden, besonders bevorzugt einem Zeitraum von 3 Stunden bis 9 Stunden, ganz besonders bevorzugt einem Zeitraum von 4 Stunden bis 8 Stunden und noch bevorzugter einem Zeitraum von 4 Stunden bis 7 Stunden unter Gasatmosphäre ausgesetzt wird.

**5.** Verfahren nach einem der Ansprüche 1 bis 4, **dadurch gekennzeichnet, dass** das Gas der Gasatmosphäre Luft, ein inertes Gas, oder ein Gemisch aus Luft und einem inerten Gas ist, wobei das inerte Gas vorzugsweise ausgewählt ist aus der Gruppe bestehend aus Stickstoff, Kohlenstoffdioxid, Argon und / oder einer Mischung aus mindestens zwei hiervon.

**6.** Verfahren nach einem der Ansprüche 1 bis 5, **dadurch gekennzeichnet, dass** Schritt II) in einer Vorrichtung erfolgt, wobei die Vorrichtung vorzugsweise ein Behälter oder Silo ist.

**7.** Verfahren nach Anspruch 6, **dadurch gekennzeichnet, dass** das thermoplastische Polyurethan (TPU-1) über einen Schlauch und / oder eine Rohrleitung der Vorrichtung für Schritt II) zugeführt wird, vorzugsweise wobei der Schlauch und / oder die Rohrleitung jeweils eine Gasatmosphäre aufweisen und das Gas der Gasatmosphäre einen Taupunkt von ≤ - 10 °C aufweist, besonders bevorzugt wobei der Schlauch und / oder die Rohrleitung jeweils eine Temperatur im Bereich von 10 °C bis 100 °C und eine Gasatmosphäre aufweisen und das Gas der Gasatmosphäre einen Taupunkt von ≤ - 10 °C aufweist.

**8.** Verfahren nach Anspruch 6, **dadurch gekennzeichnet, dass** der Taupunkt des Gases der Gasatmosphäre in Schritt II) bei Eintritt in die Vorrichtung konstant gehalten wird.

**9.** Verfahren nach einem der Ansprüche 1 bis 8, **dadurch gekennzeichnet, dass** der Druck der Gasatmosphäre im Bereich von 0,01 bar absolut bis 5,0 bar absolut, vorzugsweise im Bereich von 0,1 bar absolut bis 4,5 bar absolut und besonders bevorzugt im Bereich von 0,2 bis 3,5 bar absolut liegt.

**10.** Verfahren nach einem der Ansprüche 1 bis 9, **dadurch gekennzeichnet, dass** das thermoplastische Polyurethan (TPU-1 und TPU-2) von dem Gas der Gasatmosphäre umströmt wird, vorzugsweise durch das Gas umgewälzt wird.

**11.** Verfahren nach einem der Ansprüche 1 bis 10, **dadurch gekennzeichnet, dass** das Verhältnis von dem Volumen des Gases der Gasatmosphäre zu dem Volumen des thermoplastischen Polyurethans (TPU-1) im Bereich von 1 bis 1000, vorzugsweise im Bereich von 1,5 bis 500, und besonders bevorzugt im Bereich von 2 bis 100 liegt.

**12.** Verfahren nach einem der Ansprüche 1 bis 11, **dadurch gekennzeichnet, dass** der NCO-Gruppengehalt des thermoplastischen Polyurethans (TPU-2) um mindestens 30 %, vorzugsweise um mindestens 40 % und besonders bevorzugt um mindestens 50% geringer ist, als der NCO-Gruppengehalt des thermoplastischen Polyurethans (TPU-1), wobei der NCO-Gruppengehalt angelehnt an die DIN EN ISO 14896 bestimmt wird.

**13.** Verfahren nach einem der Ansprüche 1 bis 12, **dadurch gekennzeichnet, dass** das thermoplastische Polyurethan (TPU-1) einer Temperatur im Bereich von 20 °C bis 150 °C, vorzugsweise im Bereich von 25 °C bis 130 °C, besonders bevorzugt im Bereich von 30 °C bis 110 °C und ganz besonders bevorzugt im Bereich von 30 °C bis 100 °C unter Gasatmosphäre ausgesetzt wird.

**14.** Thermoplastisches Polyurethan (TPU-2), erhalten oder erhältlich nach dem Verfahren gemäß einem der Ansprüche 1 bis 13.

15. Verwendung von thermoplastischem Polyurethan (TPU-2) gemäß Anspruch 14 zur Herstellung einer Zusammensetzung, einer thermoplastischen Formmasse, eines Formkörpers, einer Folie, eines Films und / oder einer Faser.

16. Verwendung des Verfahrens nach einem der Ansprüche 1-13 zur Herstellung von thermoplastischem Polyurethan (TPU-2).

**Europäisches Patentamt**
**European Patent Office**
**Office européen des brevets**

# EUROPÄISCHER RECHERCHENBERICHT

Nummer der Anmeldung

EP 20 17 4032

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2005/043492 A1 (CHIN CHONG-WON [KR] ET AL) 24. Februar 2005 (2005-02-24) <br> * Absätze [0001], [0006] - [0010]; Ansprüche 1-14 * <br> * Absätze [0054], [0055] * <br> * Absatz [0056] - Absatz [0063]; Beispiele 1-4; Tabelle 1 * <br> ----- | 1-16 | INV. <br> C08L75/06 <br> C08J99/00 <br> C08L75/08 |
| X <br><br> A | JP 3 602668 B2 (KURARAY CO) 15. Dezember 2004 (2004-12-15) <br> * Absätze [0001], [0005] - Absatz [0010]; Ansprüche 1-6 * <br> * Absätze [0055], [0058] * <br> * Absatz [0059] - Absatz [0061]; Beispiele 1-7; Tabellen 2, 3 * <br> ----- | 1-11, 13-16 <br> 12 | |
| X <br><br> A | US 2009/326108 A1 (KIM YOUNG WOO [KR] ET AL) 31. Dezember 2009 (2009-12-31) <br> * Absätze [0003], [0011] - Absatz [0014]; Ansprüche 1-12 * <br> * Absatz [0043] * <br> ----- | 1-11, 13-16 <br> 12 | |
| X <br><br> A | US 5 780 573 A (IWATA SHIZUO [JP] ET AL) 14. Juli 1998 (1998-07-14) <br> * Ansprüche 1-3 * <br> * Spalte 1, Zeile 5 - Zeile 16 * <br> * Spalte 2, Zeile 17 - Zeile 35 * <br> * Beispiele 19-26 * <br> * Spalte 29, Zeile 40 - Zeile 42 * <br> * Spalte 29, Zeile 56 - Zeile 59 * <br> ----- | 1-11, 13-16 <br> 12 | RECHERCHIERTE SACHGEBIETE (IPC) <br><br> C08L <br> C09J <br> C08J |

Der vorliegende Recherchenbericht wurde für alle Patentansprüche erstellt

| Recherchenort | Abschlußdatum der Recherche | Prüfer |
|---|---|---|
| München | 9. Oktober 2020 | Paulus, Florian |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 20 17 4032

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

09-10-2020

| Im Recherchenbericht angeführtes Patentdokument | Datum der Veröffentlichung | Mitglied(er) der Patentfamilie | | Datum der Veröffentlichung |
|---|---|---|---|---|
| US 2005043492    A1 | 24-02-2005 | AT | 425222    T | 15-03-2009 |
| | | AU | 2002353631 A1 | 23-06-2003 |
| | | CN | 1589295   A | 02-03-2005 |
| | | EP | 1448708   A1 | 25-08-2004 |
| | | ES | 2324026   T3 | 29-07-2009 |
| | | JP | 4183622   B2 | 19-11-2008 |
| | | JP | 2005511848 A | 28-04-2005 |
| | | KR | 20030042167 A | 28-05-2003 |
| | | US | 2005043492 A1 | 24-02-2005 |
| | | WO | 03050187  A1 | 19-06-2003 |
| JP 3602668      B2 | 15-12-2004 | JP | 3602668   B2 | 15-12-2004 |
| | | JP | H10130954 A | 19-05-1998 |
| US 2009326108    A1 | 31-12-2009 | AT | 537216    T | 15-12-2011 |
| | | AU | 2008343025 A1 | 09-07-2009 |
| | | BR | PI0822093 A2 | 30-06-2015 |
| | | CA | 2707396   A1 | 09-07-2009 |
| | | CN | 101903446 A | 01-12-2010 |
| | | EP | 2222767   A1 | 01-09-2010 |
| | | JP | 2011508024 A | 10-03-2011 |
| | | KR | 20090067663 A | 25-06-2009 |
| | | MY | 150272    A | 31-12-2013 |
| | | RU | 2010130357 A | 27-01-2012 |
| | | TW | 200938576 A | 16-09-2009 |
| | | US | 2009326108 A1 | 31-12-2009 |
| | | WO | 2009086035 A1 | 09-07-2009 |
| US 5780573      A | 14-07-1998 | CA | 2177760   A1 | 14-12-1996 |
| | | CN | 1182098   A | 20-05-1998 |
| | | CN | 1350073   A | 22-05-2002 |
| | | EP | 0748829   A1 | 18-12-1996 |
| | | KR | 970001397 A | 24-01-1997 |
| | | TW | 319779    B | 11-11-1997 |
| | | US | 5780573   A | 14-07-1998 |
| | | US | 5912193   A | 15-06-1999 |

Für nähere Einzelheiten zu diesem Anhang : siehe Amtsblatt des Europäischen Patentamts, Nr.12/82

EPO FORM P0461

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 1964834
- GB 1057018 A
- EP 0922552 A1
- DE 10103424 A1
- WO 2006072461 A1
- DE 2901774 A

### In der Beschreibung aufgeführte Nicht-Patentliteratur

- *Kunststoffe,* 1978, vol. 68, 819
- *Kautschuk, Gummi, Kunststoffe,* 1982, vol. 35, 569
- Polyurethane. **G. BECKER ; D. BRAUN.** Kunststoff-Handbuch. Carl Hanser Verlag, 1983, vol. 7
- *Plastikverarbeiter,* 1989, vol. 40
- *Justus Liebigs Annalen der Chemie,* vol. 562, 75-136
- High Polymers. **J.H. SAUNDERS ; K.C. FRISCH.** Polyurethane. Interscience Publishers, 1962, vol. XVI
- Taschenbuch der Kunststoff-Additive. Hanser Verlag, 1989